# EUROPÄISCHE PATENTANMELDUNG

(11) **EP 2 730 480 A1**
(43) Veröffentlichungstag der Anmeldung: **14.05.2014**
(21) Anmeldenummer: 13191741.1
(22) Anmeldetag: 06.11.2013
(51) Int. Cl.: B61D 45/00, B61D 3/16, B60P 7/12

(54) **Untergestell für einen Waggon**

(30) Priorität: 09.11.2012 DE 102012220404
(71) Anmelder: Waggonbau Graaff GmbH, 31008 Elze (DE)
(72) Erfinder: Pana, Constantin, 31008 Elze (DE); Helbig, Nico, 30169 Hannover (DE)
(74) Vertreter: Lüdtke, Frank

(57) **Zusammenfassung**

Die Erfindung betrifft ein Untergestell für einen Waggon zum Transport von zylindrischen Gegenständen hoher Dichte, vorzugsweise Walzwerkserzeugnisse wie Coils, bestehend aus
- zwei Trägern (7), die parallel in einem Abstand zueinander zwischen zwei Stirnwänden (9) angeordnet sind, wobei
- jeder der beiden Träger (7) einen Obergurt (1) und einen Untergurt (3) aufweist, die durch einen längs verlaufenden Steg (2) miteinander verbunden sind, wobei
- die Obergurte (1) einen Winkel (16) bilden und damit die Mulde für die Auflage von Coils (15) darstellen und keine weiteren Aufbauten für die Lagerung der Coils (15) erforderlich sind und
- an der äußeren Seite des Obergurtes (1) jeweils eine Längsversteifung (4) angeordnet ist und
- beidseitig des Stegs (2) Rippen (5,6) angeordnet sind, und
- die Träger (7) durch Querrippen (12,13) miteinander verbunden sind.

Die erfindungsgemäße Lösung hat den Vorteil, dass zylindrische Gegenstände hoher Dichte wie Walzwerkserzeugnisse, beispielsweise Coils, unterschiedlichen Durchmessers und unterschiedlicher Länge schnell, sicher und mit geringem apparativem Aufwand auf Waggons gelagert und transportiert werden können.

## Beschreibung

Die Erfindung betrifft ein Untergestell für einen Waggon entsprechend den Merkmalen des Oberbegriffes des ersten Patentanspruches.

Die Erfindung ist überall dort anwendbar, wo Untergestelle für Waggons zum Transport von zylindrischen Gegenständen mit hoher Dichte vorhanden sind. Das kann der Fall sein bei Walzwerkserzeugnissen wie Coils mit unterschiedlichen Längen und mit unterschiedlichem Durchmesser.

Beim Transport zylindrischer Gegenstände großer Dichte wie z. B. Walzwerkserzeugnissen, kommt es, sofern diese auf dem Fahrzeugboden des Fahrzeuges gelagert und transportiert werden, aufgrund der auf das Fahrzeug einwirkenden Brems- und Beschleunigungskräfte zu Verschiebungen der Last auf dem Fahrzeugboden. Besonders beim Eisenbahntransport treten bei Rangierbewegungen erhebliche Verschiebekräfte auf, die zu unsymmetrischen Belastungen des Fahrzeuges, zu Beschädigungen der Last oder deren Verpackung führen. Dadurch können erhebliche Kosten entstehen. Um diese Schäden bei dem Transport zylindrischen Gegenständen mit hoher Dichte wie Coils vermeiden, sind unterschiedliche Lösungen bekannt.

DD 249 604 A3 beschreibt eine Vorrichtung zum Transport von zylindrischen Lasten großer Dichte auf einem Fahrzeug.
Das Dokument beschreibt wie Coils auf Eisenbahnwagen gegen auftretende Verschiebekräfte gesichert werden, indem diese in einer Aufnahmemulde einer Palette quer zur Fahrtrichtung gelagert und an vier Eckpunkten gegen Verschiebekräfte arretiert werden.
DE 66 04 588 U beschreibt einen Eisenbahngüterwagen für den Transport von schweren Blechrollen, bei dem der Boden des Wagens ganz oder teilweise mit quer zur Fahrtrichtung verschwenkbaren Bodenklappen ausgerüstet ist, die eine tragende Mulde bilden, in denen Coils angeordnet sein können, so dass diese quer und längs zur Fahrtrichtung gesichert sind.

DE 699 19 245 T2 beschreibt eine automatische Blockiervorrichtung von walzenförmigen oder quaderförmigen Teilen und Waggon mit solch einer Einrichtung.
In dem Dokument werden schräg verlaufende Auflageflächen für die zylindrischen oder quaderförmigen Teile beschrieben, wobei die schrägen Auflageflächen unabhängig voneinander schwenkbare Arme aufweisen, mit denen Rückhalteplatten so verstellbar sind, dass ein Rollen oder Kippen von Blechrollen auf Bahnwagen vermieden wird.

DE 601 10 678 T2 beschreibt eine Vorrichtung zum schrittweisen Fördern von massiven Gegenständen wie Stahlcoils innerhalb von Produktionsstätten für dieselben, wobei Tragbalken und Auflageelemente für die Coils zu deren Lage und Transport innerhalb der Produktionsstätten dienen. Die Vorrichtung ist nicht geeignet für den Transport von Coils über größere Entfernungen mit hoher Geschwindigkeit.

Nachteilig an den nach dem Stand der Technik bekannten Lösungen ist, dass aufwendige Aufbauten auf der Ladefläche des Waggons erforderlich sind oder die Transportoberfläche der Waggons entsprechend dem Durchmesser und der Länge der zu transportierenden zylindrischen Gegenstände vorzubereiten oder umzugestalten ist. Weiterhin sehen einige Lösungen vor, zylindrische Gegenstände hoher Dichte in Rollrichtung, d. h. mit ihrer Achse, parallel zur Achse des Waggons gesichert zu lagern, was bei hoher Bremskraft dazu führen kann, dass sich die zylindrischen Gegenstände aufgrund ihrer hohen Dichte trotz bewegen, was ein hohes Gefahrenpotential darstellt. Darüber hinaus sehen einige Lösungen Ladeeinrichtungen vor die sich durch bewegliche Teile umgestalten lassen, was einen erhöhten Fertigungsaufwand für das Transportmittel zur Folge hat.

Es ist daher Aufgabe der Erfindung, ein Untergestell für einen Waggon zu entwickeln mit dem zylindrische Gegenstände hoher Dichte, unterschiedlichen Durchmessers und unterschiedlicher Länge mit geringem Aufwand sicher zu lagern und zu transportieren sind.

Diese Aufgabe wird durch ein Untergestell für einen Waggon zum Transport von zylindrischen Gegenständen hoher Dichte nach den Merkmalen des ersten Patentanspruches gelöst.

Unteransprüche geben vorteilhafte Ausgestaltungen der Erfinder wieder.

Die erfindungsgemäße Lösung sieht ein Untergestell für Waggons zum Transport von zylindrischen Gegenständen hoher Dichte vor, welches aus zwei parallel und längs verlaufenden Trägern besteht, die in einem Abstand parallel zueinander zwischen zwei Stirnwänden angeordnet sind. Jeder der beiden Träger besteht aus einem Obergurt und einem Untergurt, die durch einen längs verlaufenden Steg miteinander verbunden sind. Die Obergurte weisen einen spitzen Winkel zur Waagerechten auf. Vorteilhaft ist es, wenn dieser spitze Winkel zur Waagerechten zwischen 25 und 40 Grad liegt. Dadurch, dass die Obergurte zur Waagerechten im spitzen Winkel angeordnet sind, bilden die Obergurte zueinander eine V- oder eine Prismenform im folgenden auch als Mulde bezeichnet, in die zylindrische Gegenstände hoher Dichte hineingelegt und in diesen gelagert oder transportiert werden können.
Der Winkel der Obergurte zueinander liegt vorteilhafterweise zwischen 100 bis 130 Grad.

Unter zylindrischen Gegenständen hoher Dichte sind vorzugsweise Walzwerkserzeugnisse zu verstehen. Derartige Walzwerkserzeugnisse können Coils darstellen. Diese Coils können Durchmesser bis über 2 m aufweisen. Sie bestehen aus gewalztem Stahl und weisen daher eine sehr hohe Dichte auf. Derartige Coils können je nach Verwendung unterschiedlich lang sein. Ihre Länge kann geringer als ein Meter und länger als zwei Meter sein. Selbstverständlich lassen sich auf dem erfindungsgemäßen Untergestell für einen Waggon auch andere zylindrische Gegenstände transportieren.

Die Träger des Untergestells werden aus Stahl hergestellt.

Beidseitig des längs der Träger verlaufenden Steges sind zur Stabilisierung Längsversteifungen und Rippen angeordnet. Die paarweise angeordneten inneren und äußeren Rippen sind mit dem Steg, dem Ober- und dem Untergurt verschweißt.

Die paarweise angeordneten Rippen und der Steg weisen entlang des Trägers unterschiedliche Höhen auf.

Weiterhin sind die beiden Träger durch Querrippen miteinander verbunden, wobei eine obere und eine untere Querrippe zum Verbinden der Träger vorhanden ist.

Vorteilhaft ist es, zwischen den Trägern eine Tasche anzuordnen. Im dieser Taschen können drehbare Anschläge angeordnet sein. Jeder dieser drehbaren Anschläge kann mit einer Feder versehen sein, die den Anschlag in einer senkrechten Position hält. In dieser Position verhindert der Anschlag das Verschieben des Coils längs des Waggons.
Die Länge des Anschlages ist geringer als die Breite der Tasche. Die Breite jedes drehbaren Anschlages muss geringer sein als die Höhe der Tasche, damit der Anschlag bei aufgelegter Ladung sich in die Tasche dreht und dort vollständig eintauchen kann. Weiterhin ist es vorteilhaft, längs des Steges, der den Obergurt und den Untergurt verbindet, 12 bis 16, vorzugsweise 16, innere und äußere Rippen anzuordnen, wobei die Anzahl der inneren Rippen mit der der äußeren Rippen überstimmen sollte.

Um die zylindrischen Gegenstände mit hoher Dichte gegen ein Verschieben längs der Fahrtrichtung des Waggons zu sichern, ist es vorteilhaft, Sicherungsmittel anzuordnen. Dazu sind in vorteilhafter Weise drehbare Anschläge vorzusehen, die in der Tasche zwischen den Trägern anzuordnen sind. Ihre Anzahl und ihre Abstände zueinander richten sich nach den üblichen Längen der zu transportierenden Coils. Ihre Länge ist so zu bemessen, dass ein Verrutschen der Coils auch bei sehr hohen negativen Beschleunigungen nicht möglich ist.
Die erfindungsgemäße Lösung hat den Vorteil, dass zylindrische Gegenstände hoher Dichte wie Walzwerkserzeugnisse, beispielsweise Coils, unterschiedlichen Durchmessers und unterschiedlicher Länge schnell, sicher und mit geringem apparativem Aufwand auf Waggons gelagert und transportiert werden können.
Die Tragstruktur des Untergestells mit seinen beiden parallel verlaufenden Trägern und den schräg zu einander angeordneten Obergurten bilden direkt die Mulde für die Auflage der Coils. Ein zusätzlicher Aufbau für die Lagerung der Coils ist nicht mehr erforderlich. Hier kommt es zu einer deutlichen Gewichtsersparnis im Vergleich zu bestehenden Lösungen

Im Folgenden wird die Erfindung an einem Ausführungsbeispiel und vier Figuren näher erläutert. Die Figuren zeigen:
- Fig. 1:: Ansicht des Trägers im Schnitt
- Fig.2:: Ansicht von oben auf das erfindungsgemäße Untergestell in schematischer Darstellung
- Fig. 3:: Schnitt A-A von Fig.2.
- Fig. 4:: Ansicht von der Seite auf das erfindungsgemäße Untergestell

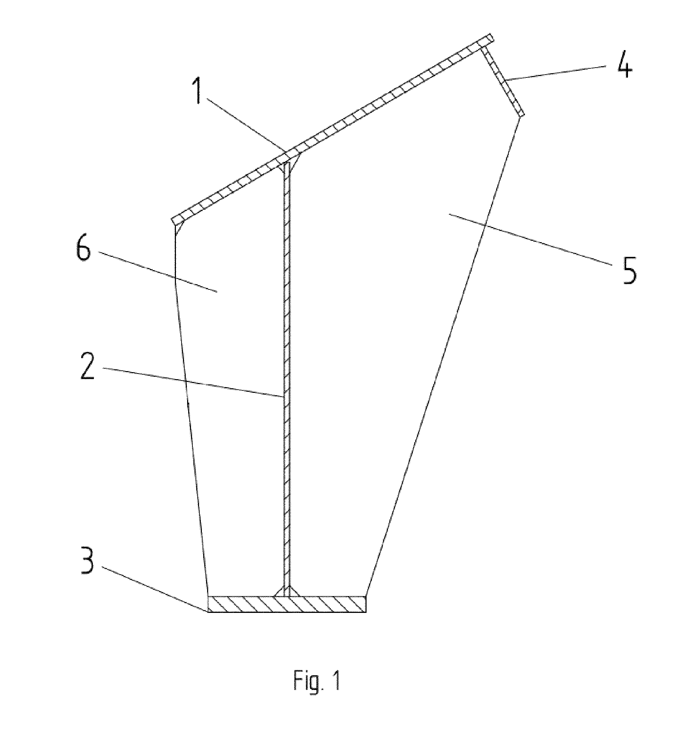

Die Fig. 1 zeigt den Querschnitt des Trägers 7 bestehend aus einem Obergurt 1 der unter einem Winkel zur Waagerechten steht, einem Steg 2 und einem Untergurt 3. An der Außenseite des Obergurtes 1 befindet sich eine durchlaufende Längsversteifung 4.

Zwischen Obergurt 1 und Untergurt 2 sind äußere Rippen 5 und innere Rippen 6 angeordnet.

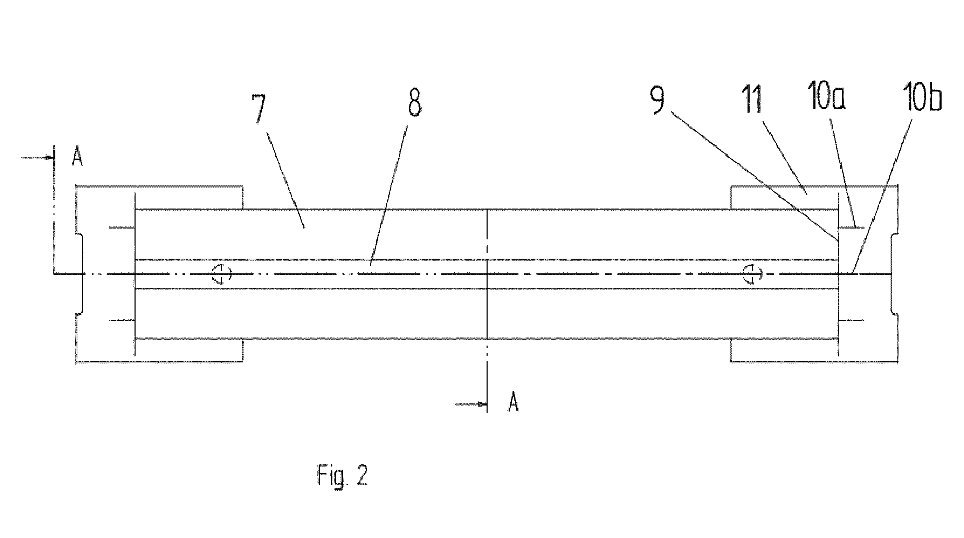

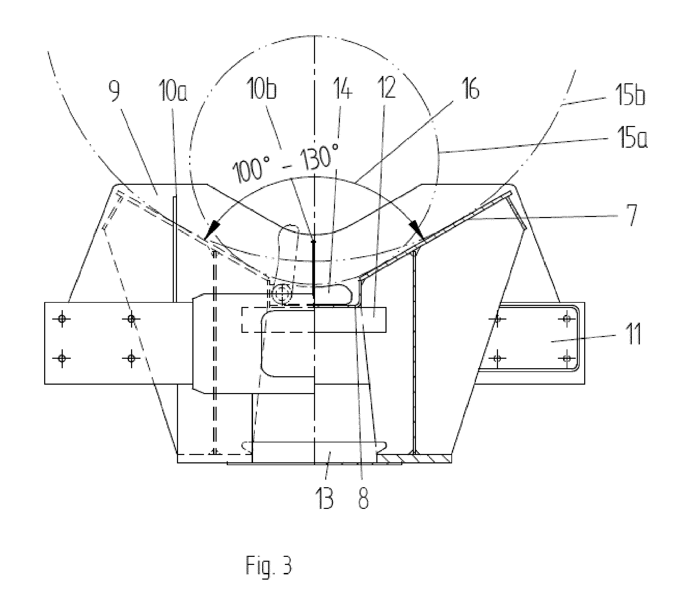

Die *Fig.2* zeigt in schematischer Darstellung von oben das erfindungsgemäße Untergestell für einen Waggon zum Transport von Coils. Das Untergestell besteht aus zwei parallelen Trägern 7, zwischen denen eine Tasche 8 angeordnet ist, wobei an beiden Enden der Träger 7 eine Stirnwand 9 die Träger 7 abgrenzt, die sich auf dem Vorbau 11 befinden. An der Stirnwand 9 sind die Stirnwandrippen 10a, 10b angeordnet, die die Stirnwand stabilisieren.
Weiterhin zeigt die Fig. 2 den Schnittverlauf A-A von Fig. 3.

Die *Fig.3* zeigt in einem Halbschnitt A-A das Untergestell in einer Ansicht von vorn, wobei Coils 15a, 15b, unterschiedlicher Durchmesser dargestellt sind, die auf den beiden Trägern 7 liegen. Beide Träger 7 sind durch die obere Querrippe 12 und die untere Querrippe 13 stabil miteinander verbunden. Zwischen den beiden Trägern 7 ist die Tasche 8 angeordnet, in der der drehbare Anschlag 14 die Coils 15a, 15b in der Längsrichtung, also der Fahrtrichtung des Waggons, stabilisiert. Die drehbaren Anschläge 14 können dazu eine Länge aufweisen, die kleiner als die Breite der Tasche 8 bemessen ist. Die Breite des drehbaren Anschlages 14 muss so bemessen sein, dass im eingeklappten Zustand noch genügend Abstand zu dem zu transportierenden Coil 15a, 15b, besteht und die Coils 15a, 15b, sich auf der Mulde ablegen und nicht auf dem drehbaren Anschlag 14.

Beidseitig der Träger 7 sind Stirnwände 9 und Stirnwandrippen 10a angeordnet. Die Obergurte 1 bilden zueinander einen Winkel 16 Dieser liegt im vorliegenden Ausführungsbeispiel bei etwa 130 Grad.

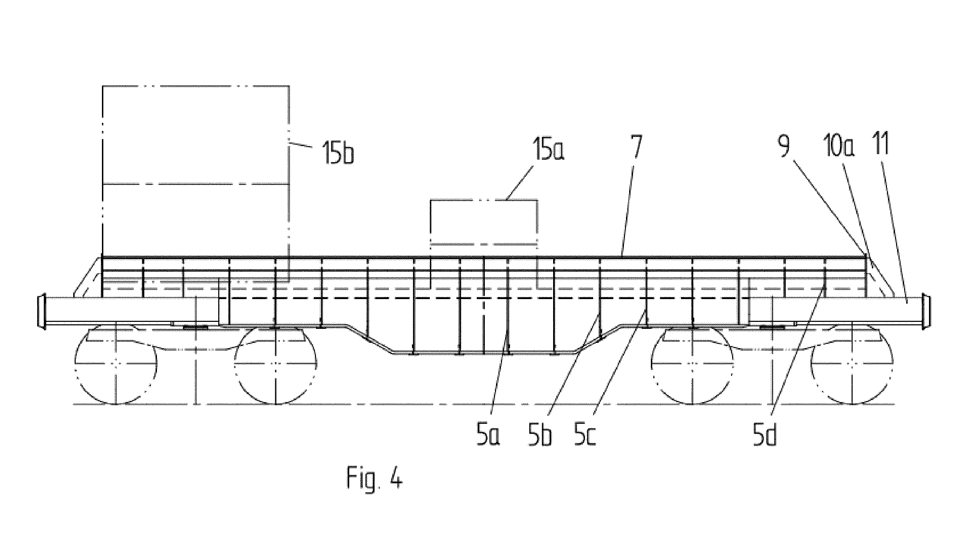

Fig. 4 zeigt eine seitliche Ansicht des Untergestells auf dem zwei Coils 15a, 15b unterschiedlicher Größe angeordnet sind. Die Enden der Träger 7 sind auf den Vorbauten 11 aufgesetzt, wobei die Untergurte 3 der Träger 7 an die Untergurte der Vorbauten 11 geschweißt sind. An den Enden der Trägern 7 befinden sich auf den Vorbauten 11 die Stirnwände 9 als Begrenzung der Mulde die von den Trägern 7 gebildet wird. Die Stirnwände 9 wiederum sind durch die Stirnwandrippen 10a verstärkt. Die seitliche Ansicht zeigt auch die Anordnung der äußeren Rippen 5a bis 5d, die in Abhängigkeit ihrer Lage in ihrer Höhe unterschiedlich ausgeführt sind. Die inneren Rippen 6 und der Steg 2 sind analog zu den äußeren Rippen 5 in ihrer Höhe unterschiedlich ausgeführt (nicht dargestellt).

### Liste der verwendeten Bezugszeichen

- 1: Obergurt
- 2: Steg
- 3: Untergurt
- 4: Längsversteifung
- 5: äußere Rippe
- 6: innere Rippe
- 7: Träger
- 8: Tasche
- 9: Stirnwand
- 10: Stirnwandrippe
- 11: Vorbau
- 12: Obere Querrippe
- 13: untere Querrippe
- 14: drehbarer Anschlag
- 15: a Coil (kleinster Durchmesser) b Coil (größter Durchmesser)
- 16: Winkel

## Patentansprüche

1. Untergestell für einen Waggon zum Transport von zylindrischen Gegenständen hoher Dichte, vorzugsweise Walzwerkserzeugnisse wie Coils, **gekennzeichnet durch**
- zwei Träger (7), die parallel in einem Abstand zueinander zwischen zwei Stirnwänden (9) angeordnet sind, wobei
- jeder der beiden Träger (7) einen Obergurt (1) und einen Untergurt (3) aufweist, die **durch** einen längs verlaufenden Steg (2) miteinander verbunden sind, wobei
- die Obergurte (1) einen Winkel (16) bilden und damit die Mulde für die Auflage von Coils (15) darstellen und keine weiteren Aufbauten für die Lagerung der Coils (15) erforderlich sind und
- an der äußeren Seite des Obergurtes (1) jeweils eine Längsversteifung (4) angeordnet ist und
- beidseitig des Stegs (2) Rippen (,5,6) angeordnet sind, und
- die Träger (7) **durch** Querrippen (12,13) miteinander verbunden sind.

2. -Untergestell nach Anspruch 1, **dadurch gekennzeichnet, dass** die Träger (7) durch eine obere und eine untere Querrippe (12, 13) miteinander verbunden sind.

3. Untergestell nach den Ansprüchen 1 und 2, **dadurch gekennzeichnet, dass** der Winkel (16) der Obergurte (1) 100 bis 130 Grad beträgt.

4. Untergestell nach einem der Ansprüche 1 bis 3, **dadurch gekennzeichnet, dass** zwischen den Trägern (7) eine Tasche (8) angeordnet ist.

5. Untergestell nach einem der Ansprüche 1 bis 4, **dadurch gekennzeichnet, dass** längs des Steges (2).16 äußere und innere Rippen (, 5,6) angeordnet sind.

6. Untergestell nach einem der Ansprüche 1 bis 5, **dadurch gekennzeichnet, dass** zwischen den Trägern (7) in der Tasche (8) drehbare Anschläge (14) angeordnet sind.

7. Untergestell nach einem der Ansprüche 1 bis 6, **dadurch gekennzeichnet, dass** die Länge des drehbaren Anschlags (14) geringer ist als die Breite der Tasche (8) damit sich der Anschlag (14) bei aufgelegter Ladung in die Tasche (8) dreht und dort vollständig eintauchen kann.

8. Untergestell nach einem der Ansprüche 1 bis 7, **dadurch gekennzeichnet, dass** beidseitig unterhalb der Stirnwände (9) ein Vorbau (11) angeordnet ist.

9. Untergestell nach einem der Ansprüche 1 bis 8, **dadurch gekennzeichnet, dass** der drehbare Anschlag (14) mit einer Feder versehen ist, die diesen in einer senkrechten Position hält.
